# EUROPEAN PATENT APPLICATION

(11) **EP 1 357 495 A1**
(43) Date of publication of application: **29.10.2003**
(21) Application number: 01995021.1
(22) Date of filing: 26.12.2001
(51) Int. Cl.: G06F 17/60

(54) **CONTENT DATA ENCODING SYSTEM AND CONTENT REGISTERING SYSTEM**

(30) Priority: 26.12.2000 JP 2000396069
(71) Applicant: Foursis Business Promotion Kabushiki Kaisha, Tokyo 101-0045 (JP)
(72) Inventor: NAKANISHI, Naoya, Foursis Business Promotion K.K., Tokyo 101-0045 (JP); TOYOTA, Yuichi, Kabushiki Kaisha CCP, Tokyo 104-0031 (JP)
(74) Representative: Klunker . Schmitt-Nilson . Hirsch
(86) International application number: JP0111506
(87) International publication number: WO02052470

(57) **Abstract**

Performing protection of content and appropriate charging at the time of using the content according to a method of use. There is provided an encode system for content such as an image consisting of computer readable data using a computer system provided with input means, storage means, control means, display means, and output means, which is characterized in that sample data of content, data of content main body, charging information concerning a price of using the content, attribute information for controlling use of the content, and a unique ID for identifying the content are included in data stored by processing including: a step of designating charging information concerning a price of using the content, attribute information concerning control of use of the content, and information for creating the content main body and sample data of the content; a step of packaging data of the content based upon the designated information; a step of designating a storage place of the content; and a step of storing the packaged data in an information storage medium.

## Description

### TECHNICAL FIELD

The present invention relates to a system and a method for encoding content such as an image file into a predetermined data format as well as a system for registering content using the encode method, and in particular to an encode system and method for encoding content into a data format for charging a user for the content when the user downloads the content from a content server through a computer network such as the Internet.

### BACKGROUND ART

In recent years, following development of a computer network and a communication environment, businesses such as commercial activities represented by the Internet have been actively carried out. There are a large number of Web sites for a shopping mall, an auction, and the like as well, and various techniques such as a settlement method which attend them have been developed.

In addition, a personal digital assistant, a cellular phone, and a PHS as well as information consumer electronics such as an Internet TV and a game device have widely spread other than information equipment such as a personal computer. Some cellular phones equipped with a browser function have been placed on the market, and it has also become possible to browse a Web page on the Internet from a cellular phone terminal.

Under such circumstances, it has been becoming possible for a user to access various contents through a computer network to perform browsing, output such as printing, acquisition by means of download, and the like of the content, and needs for a technique relating to a price for acquisition of content online and copyright therefor (or royalty for copyright) have been increasing rapidly.

Under such circumstances, a system for allowing a user to distribute and browse various contents such as distribution of music through an electronic network has been developed, and in addition, following the development of the system, means for charging, a compression technique of information for performing distribution or the like, an encryption technique for protection of copyright, privacy information, and the like, a user interface for allowing the user to use the system with a simple operation, and the like have been developed.

Under such circumstances, it becomes necessary to apply data compression or the like to data of content used for distribution or the like of the content such that storage ad data management can be performed efficiently.

In addition, other than content itself, it is preferable to allow a user to browse only a sample of content before performing charging or the like or to realize a data format which is preferable for managing charging information and incidental information concerning copyright and the like.

As such a conventional technique, for example, in JP-A-11-224257 "Encapsulation object configuration method, encapsulation object retrieval execution method and system,. and storage medium having stored therein encapsulation object retrieval execution program", there is disclosed a technique for starting up a retrieval application, inquiring a searcher holding a right to use for using the retrieval application about the right to use of the retrieval application, acquiring the right to use from the searcher, starting up a retrieval method with the acquired right to use as an argument, generating retrieval options in the retrieval method in multiple stages and, at the same time, generating index information in multiple stages with the retrieval method to develop a capsule, and using the retrieval options developed in the capsule to perform retrieval targeting the generated index information with the retrieval application.

According to this invention, an encapsulation object configuration method is adopted which applies retrieval, with an accuracy which is different depending upon a searcher, to an encapsulation object for which direct reference is made impossible by encapsulating a multimedia object, which is characterized by providing, in one capsule, a multimedia object consisting of multimedia content and laid-open index information, plural methods for a capsule operation including at least one retrieval method for performing retrieval, and an interface for starting up the retrieval method. Consequently, effects as described below are generated.

That is, in the case in which, for example, digital content is retrieved, since the index information is added to the content, it becomes possible to develop the encapsulated content with an accuracy, which is different depending upon a retrieval level, and retrieve the content efficiently.

However, although the method of retrieving content through a network using the index information is disclosed here, there is no disclosure about an encode technique for content for performing charging processing at a point when, for example, a user has downloaded or outputted content and, what is more, performing charging processing according to a size, a resolution, an output method, and the like of the content, at the time of charging, and performing protection of content in the case in which charging processing is not performed (i.e., in the case in which download, output, or the like is not performed).

In addition, in JP-A-11-149707 "Digital content distribution system", there is disclosed a technique in which, when a software user who manages a data recording device sends a request to a content distribution center which converts content software such as a video into digital data compressed in time base and stores the digital data, the content distribution center distributes a collation code, which collates the digital data compressed in time base of the content software according to the request and an identification code, through information transmission means, the data recording device records the digital data when the received collation code is collated with an identification code of its own and, at the same time, a development device develops the digital data compressed and recorded in the data recording device to output the digital data to an output device.

According to this invention, content software with a large amount of information such as a video, an image, music, or the like desired by a user can be provided to the user inexpensively without intervention of media.

However, although the compression and development method of content with a large amount of information is disclosed here, there is no disclosure about an encode technique for content for performing charging processing at the point when a user has downloaded or outputted content and, what is more, performing charging processing according to a size, a resolution, an output method, and the like of the content at the time of charging, and performing protection of content in the case in which charging processing is not performed (i.e., in the case in which download, output, or the like is not performed).

Alternatively, in JP-A-10-269289 "Digital content distribution management method, digital content reproduction method and apparatus", there is disclosed a technique for integrating a public encryption/decryption circuit for decrypting an encrypted content key and encrypting a session key, a common key storage memory for storing the content key and the session key, a communication key storage memory for storing key information of a public encryption system, a point information storage memory for storing point information, a point use information storage memory for storing point use information, a common encryption/decryption circuit for performing decryption of encrypted digital content, decryption of encrypted point information, and encryption of point use information, an expansion circuit for expanding compressed digital content, and a D/A conversion circuit for D/A converting digital content into one chip.

According to this invention, a system is established which can be carried easily and makes it possible to enjoy digital content anytime and anywhere, sufficiently withstands operation as a protection against copying or illegal use of digital content, and is economical.

However, again, there is no disclosure here about an encode technique for content for performing charging processing at the point when a user has downloaded or outputted content and, what is more, performing charging processing according to a size, a resolution, an output method, and the like of the content at the time of charging, and performing protection of content in the case in which charging processing is not performed (i.e., in the case in which download, output, or the like is not performed).

Alternatively, in JP-A-8-54950 "Software used amount measurement device and multimedia information output device", there is disclosed a software used amount measurement device which can determine a used amount for performing appropriate charging even in the case in which software is used in a form of use other than a usual form of use.

According to this invention, when encrypted image data frames compressed according to the MPEG standard are sent to an SD circuit, a DES decryption section decrypts the frames on condition that a charging counter value is one or more. The decrypted image data frames are expanded in an MPEG expansion circuit one by one. Every time one frame is expanded, the MPEG expansion circuit outputs a frame expansion completion signal to a frame counter section. The frame counter section counts this frame expansion completion signal and outputs a counter value to a unit conversion section. Every time the counter value reaches a predetermined reference value, the unit conversion section instructs a charging counter register section to decrement a charging count value.

However, although the charging processing in decrypting encrypted data in the MPEG standard is disclosed here, there is no disclosure about an encode technique for content for charging which, in performing charging processing, is efficient for performing charging processing according to a size, a resolution, an output method, and the like of content and, what is more, in which a content user designates the size, the resolution, the output method, and the like at the point when the charging processing is performed, and a data structure of content for that purpose and content data of the data structure are used.

Alternatively, in JP-A-6-141004 "Charging system", there is disclosed a technique for realizing a so-called "pay-per program" with which a user views individual programs with charges without entering into a comprehensive agreement.

According to this invention, a charging center sends a viewing permission code for viewing a pay program to a data communication device in response to an application for pay program view carried out via a public telephone and telegram line from an applicant for pay program viewing and, at the same time, collects charges and, in a receiving device which has received the viewing permission code, a user views a pay program in accordance with the viewing permission code. One of three forms of fixed, selection, and change is adopted for a way of scrambling a broadcast program, one of three forms of time designation, program number designation, and preliminary number designation is adopted for application for viewing, and one of three forms of decode data, nonpublic program number, and decode data number is adopted as the viewing permission code.

However, although the charging processing in program viewing is disclosed here, there is no disclosure about an encode technique for content for charging which, in performing charging processing, is efficient for performing charging processing according to a size, a resolution, an output method, and the like of content and, what is more, in which a content user designates the size, the resolution, the output method, and the like at the point when the charging processing is performed, and a data structure of content for that purpose and content data of the data structure are used.

In addition, as a technique related to acquisition of an authentication key, for example, in JP-A-2000-90039 "Music distribution method, transmission apparatus and method, as well as reproduction apparatus and method", there is disclosed a technique for sufficiently taking into account protection of copyright of distributed music data.

According to this invention, a terminal device, identification information, charging processing, and digital audio data are provided, and a music server and a client are connected to the Internet. In the client, a public key and a secret key are created based upon an ID peculiar to a reproduction apparatus. The public key is sent to the server and registered and the secret key is held in the apparatus. Distribution of music data is requested to the server from the client. Encryption is applied to the music data extracted from a music DB with the registered public key.

The encrypted music data is sent to the client and saved in the reproduction apparatus. At the time of reproduction, the music data is reproduced while being decoded with the secret key held in the apparatus. The music data saved in the apparatus cannot be reproduced by other reproduction apparatuses because the music data is encrypted with the key which is created based upon the ID peculiar to the apparatus.

However, although the technique for distribution of music data, charging processing, and copyright protection is disclosed here, since charging processing which uses an ID peculiar to a reproduction apparatus is performed, music data cannot be reproduced by other reproduction apparatuses.

In addition, in JP-A-8-55021 "Key authentication system", there is disclosed a technique for realizing improvement of security in sales of software and, at the same time, reducing a temporal burden on a user without complicating a storage medium for the software.

According to this invention, a module which can be incorporated in or detachably attached to hardware is provided to encryption software obtained from a software storage medium or by communication and a function for generating unique information peculiar to a user is provided in this module and, at the same time, a function for generating permission information based upon the information peculiar to the user is given to a center managing the software, whereby it is judged whether or not a user is a proper user who should be permitted to use the software based upon the information generated in the module and the permission information generated in the center.

In this way, although the technique for judging whether or not a user is a proper user who should be permitted to use software is disclosed, there is no disclosure about an encode technique for content for charging which is efficient for performing charging processing according to a size, a resolution, an output method, and the like of content and, what is more, in which a content user designates the size, the resolution, the output method, and the like at the point when the charging processing is performed, and a data structure of content for that purpose and content data of the data structure are used.

Moreover, as a technique related to charging processing at the time of printing, for example, in JP-A-11-119937 "Network printer", there is disclosed a technique for making it possible to correctly perform charging management in a network printer applicable to multi-protocol.

According to this invention, a network printer is provided with: a network adapter having a communication protocol section for receiving communication print data of multi-protocol including charging information and print object data; a communication application section for adding a print processing instruction to the communication print data to output the data, and charging management protocol selection means for outputting only communication print data in a communication protocol and a communication application selected by a user when charging management is performed; a controller for receiving the communication print data outputted from the network adaptor to output the data; a print section for printing print object data; and a charging management section for acquiring charging information from the print section. Consequently, charging management can be performed correctly.

In this way, although a network printer which can perform charging management is realized by using communication print data of multi-protocol including charging information and print object data, there is no disclosure about an encode technique for content for charging which, in performing charging processing, is efficient for performing charging processing according to a size, a resolution, an output method, and the like of content and, what is more, in which a content user designates the size, the resolution, the output method, and the like at the point when the charging processing is performed, and a data structure of content for that purpose and content data of the data structure are used.

Thus, in order to solve the above-mentioned problems, the present invention relates to a system for encoding content such as an image file into a predetermined data format and a system for registering content using the encode system, and in particular it is an object of the present invention to provide an encode system for encoding content into a data format for charging a user for the content when the user downloads the content from a content server through a computer network such as the Internet.

In addition, in particular, it is another object of the present invention to provide a system which is capable of encoding data of content used for distribution of content into a data format, with which storage and data management can be performed efficiently, by performing data compression or the like.

Further; it is another object of the present invention to provide a system which allows a user to browse, other than content itself, only a sample of the content before, for example, charging the user for browsing the content or is capable of encoding content into a data format which is preferable for managing incidental information concerning charging information, copyright, and the like.

Moreover, it is another object of the present invention to provide a system with which a user is capable of registering content in a server using these encode systems.

### DISCLOSURE OF THE INVENTION

In order to solve the above-mentioned problems, according to the invention of claim 1, there is provided an encode system for content data for encoding content such as an image consisting of computer readable data using a computer system provided with input means, storage means, control means, display means, and output means, which is characterized in that sample data of content, data of content main body, charging information concerning a price of using content, attribute information for controlling use of content, and a unique ID for identifying content are included in data stored by processing including:
a step of designating charging information concerning a price of using the content, attribute information concerning control of use of the content, and information for creating the content main body and sample data of the content;
a step of packaging data of the content based upon the designated information;
a step of designating a storage place of the content; and
a step of storing the packaged data in an information storage medium.

In addition, in order to solve the above-mentioned problems, according to the invention of claim 2, there is provided an encode system for content data for encoding content such as an image consisting of computer readable data using a computer system provided with input means, storage means, control means, display means, and output means, which is characterized in that sample data of content, information on a URL where a content main body exists, charging information concerning a price of using content, attribute information for controlling use of content, and a unique ID for identifying content are included in data stored by processing including:
a step of designating charging information concerning a price of using the content, attribute information concerning control of use of the content, and information for creating the content main body and sample data of the content;
a step of packaging data of the content based upon the designated information;
a step of designating a storage place of the content; and
a step of storing the packaged data in an information storage medium.

In addition, in order to solve the above-mentioned problems, according to the invention of claim 3, there is provided an encode system for content data for encoding content such as an image consisting of computer readable data using a computer system provided with input means, storage means, control means, display means, and output means, which is characterized in that sample data of content, a content location ID for identifying a location of the content main body on a network, charging information concerning a price of using content, attribute information for controlling use of content, and a unique ID for identifying content are included in data stored by processing including:
a step of designating charging information concerning a price of using the content, attribute information concerning control of use of the content, and information for creating the content main body and sample data of the content;
a step of packaging data of the content based upon the designated information;
a step of designating a storage place of the content; and
a step of storing the packaged data in an information storage medium.

In addition, in order to solve the above-mentioned problems, according to the invention of claim 4, there is provided an encode system for content data according to any one of claims 1 to 3 of the present invention, which is characterized in that one or plural conditions among conditions such as a size, a term of validity, a resolution, an output method, and the like of content are included in the charging information provided in the created and stored data.

In addition, in order to solve the above-mentioned problems, according to the invention of claim 5, there is provided an encode system for content data according to any one of claims 1 to 4 of the present invention, which is characterized in that the content main body provided in the created and stored data is in a data format with which the content main body is subjected to processing for performing compression of an amount of data and, at the time when the content main body is used, the content main body is decoded and outputted in response to a command from the content server.

In addition, in order to solve the above-mentioned problems, according to the invention of claim 6, there is provided an encode system for content data according to any one of claims 1 to 5 of the present invention, which is characterized in that the created and stored data is a file such as an HTML file, an XML file, or a CHTML file to be displayed on a computer network in which the sample data of the content, the information on a URL where the content main body is located or the content location ID for identifying a location of the content on a network, the charging information concerning price information of the content, the attribute information concerning control of use of the content, and the unique ID for identifying the content are included.

In addition, in order to solve the above-mentioned problems, according to the invention of claim 7, there is provided an encode system for content data according to any one of claims 1 to 6 of the present invention, which is characterized in that the step of storing the packaged data in an information storage medium is processing for storing the data in a content server for storing content such as an image on the computer network.

In addition, in order to solve the above-mentioned problems, according to the invention of claim 8, there is provided an encode system for content data provided with, on a computer network:
a content server for storing content such as an image;
a portal WEB server which a user accesses in order to use and purchase the content; and
a commerce server for managing information on a user and information on use and purchase of the content by the user, which is characterized by performing encode using an encode system for content data according to any one of claims 1 to 7.

In addition, in order to solve the above-mentioned problems, according to the invention of claim 9, there is provided a content registration system according to any one of claims 1 to 8 of the present invention, which is characterized in that the registration of content becomes possible by using dedicated software provided in a browser.

In addition, in order to solve the above-mentioned problems, according to the invention of claim 10, there is provided a content registration system according to the invention of claim 9, which is characterized in that an authentication key for authentication with respect to a user is a hardware key such as a USB key.

In addition, in order to solve the above-mentioned problems, according to the invention of claim 11, there is provided a content registration system according to claims 9 to 10 of the present invention, which is characterized in that the authentication key for authentication with respect to a user is obtained through a network when a user accesses the commerce server.

In addition, in order to solve the above-mentioned problems, according to the invention of claim 12, there is provided a content registration system according to any one of claims 9 to 11 of the present invention, which is characterized in that the registration of content becomes possible by using dedicated software provided in a browser.

In addition, in order to solve the above-mentioned problems, according to the invention of claim 13, there is provided a content registration system according to any one of claims 9 to 12 of the present invention, which is characterized in that the system is further provided with a content registration shop terminal, which is provided by the system administrator side, connected to the computer network, and a user provides an authentication key in the content registration shop terminal, whereby registration of content is possible.

Further, in order to solve the above-mentioned problems, according to the invention of claim 14, there is provided an encode system for content data according to any one of claims 1 to 13 of the present invention, which is characterized by including a step of, when encode of content is performed, in the terminal apparatus, selecting in a terminal apparatus whether the content main body is included, the URL where the content is located is included, or the content location ID for identifying a location of content on a network is included in data which is encoded and stored in an information storage medium.

### BRIEF DESCRIPTION OF THE DRAWINGS

Fig. 1 is a data structure diagram showing an example of a data structure of a content including sample data of the content, data of the content, charging information concerning price information of the content, a unique ID for identifying the content.
Fig. 2 is a data structure diagram showing an example of a data structure of a content including sample data of the content, information on a URL where the content is located, charging information concerning price information of the content, and a unique ID for identifying the content.
Fig. 3 is a data structure diagram showing an example of a data structure of a content including sample data of the content, a content location ID for identifying a location of the content on a network, charging information concerning price information of the content, and a unique ID for identifying the content.
Fig. 4 is a system diagram showing an example of a basic system configuration of a content encode system of the present invention.
Fig. 5 is a flowchart showing a flow of basic processing of a portal WEB server.
Fig. 6 is a flowchart showing a flow of basic processing of a commerce server.
Fig. 7 is a flowchart showing a flow of basic processing of a content server.
Fig. 8 is a flowchart showing an outline of basic processing at the time when encode of a content is performed.
Fig. 9 illustrates screen images showing transition of a terminal screen in the case in which encode of content is performed using dedicated software.
Fig. 10 illustrates screen images showing transition of a terminal screen in the case in which encode of content is performed using dedicated software.
Fig. 11 is a flowchart showing a flow of basic processing of an encode system in the case in which a content main body is included in data which is encoded and stored in an information storage medium.
Fig. 12 is a flowchart showing a flow of basic processing of an encode system in the case in which a content main body is included in data which is encoded and stored in an information storage medium.
Fig. 13 is a flowchart showing a flow of basic processing of an encode system in the case in which a URL where content is located is included in data which is encoded and stored in an information storage medium.
Fig. 14 is a flowchart showing a flow of basic processing of an encode system in the case in which a URL where content is located is included in data which is encoded and stored in an information storage medium.
Fig. 15 is a flowchart showing a flow of basic processing of an encode system in the case in which a content location ID for identifying a location of content on a network is included in data which is encoded and stored in an information storage medium.
Fig. 16 is a flowchart showing a flow of basic processing of an encode system in the case in which a content location ID for identifying a location of content on a network is included in data which is encoded and stored in an information storage medium.
Fig. 17 is a flowchart showing an example of a flow of basic processing in the case in which a step of, when encode of content is performed, selecting in a terminal apparatus whether a content main body is included, a URL where the content is located is included, or a content location ID for identifying a location of content on a network is included in data which is encoded and stored in an information storage medium.

### BEST MODE FOR CARRYING OUT THE INVENTION

Embodiments of the present invention will be hereinafter described with reference to the accompanying drawings.

First, a data structure of content (image, moving image, software, etc.) used in a content charging system of the present invention will be described.

The content is content such as an image consisting of computer readable data and is stored in an information storage medium such as a storage apparatus for storing content such as a database server, an external storage device such as a hard disk, a floppy disk, an MO, a memory stick (trademark), or a smart medium (trademark).

Content used in the present invention includes data such as character data, still image data, moving image data, animation image data, presentation data, slide data, voice data, game software, and application program software, and consists of, for example, a file format as described below.

As a file format of a still image, there are, for example, JPEG (Joint Photographic Experts Group), PICT (QuickDraw Picture Format), BMP (Bitmap), GIF (Graphics Interchange Format), PNG (Portable Network Graphics), and the like.

As a file format of a moving image, there are, for example, MPEG-1, MPEG-2, MPEG-4, RV (Real Video), MNG (Multiple-image Network Graphics), AVI (Audio Video Interleaved), and the like.

As a file format of a voice, there are, for example, AIFF (Audio Interchange File Format), WAV (Waveform), Au, RA (Real Audio), MEPG-1 voice compression system, MPEG-2 voice compression system, MPEG-4 voice compression system, and the like.

In addition, as a file format according to a multiplexed system of a moving image and a voice, there are, for example, QUICKTIME, MPEG-1, MPEG-2PS, and the like.

In addition, as an example of a document file format, PDF (Portable Document Format) is known and, as a compression file format with archive function, zip, lzh, and the like are known.

Further, various file formats other than the above-mentioned ones can be used.

Conventionally, it has been usually performed to make information such as a file name, a file creation data and time, and a file creator name incidental to these files as header information or the like of a file other than data of content itself.

In the present invention, as described below, the data structure according to claims 1 to 8 of the present invention is adopted and encode is applied to the data structure, whereby encode is applied to a data structure which can perform appropriate charging according to detailed conditions such as a size, a resolution, and an output method of content such that the content can be stored in an information storage medium.

### (First embodiment)

A content encode system according to the invention of claim 1 is a system for encoding content such as an image consisting of computer readable data using a computer system provided with input means, storage means, control means, display means, and output means.

The input means is used for input of an instruction for an encode operation and includes, other than input means such as a keyboard and a mouse, input means of a scanner, a tablet, a digital camera, a digital video camera, or a microphone which is connected to the control means via an interface and further includes input means which is inputted from an input/output terminal via a communication line or the like.

The storage means includes a storage device for storing data such as content other than encode means serving as a program for performing encode, other application programs, and programs such as an operating system.

The control means controls the above-mentioned various programs, performs calculation, and performs various kinds of control such as input/output, communication, and display.

The display means is usually a display or the like.

The output means includes, for example, voice output means, an output to an external storage device or the like, and an output to the outside via a communication line or the like other than output means such as a printer.

In addition, the above-mentioned input means, storage means, control means, display means, and output means can be constituted only by one computer terminal and peripheral equipment connected to it, or may adopt a structure in which plural apparatuses are connected by network connection including an input/output interface and a cable, an LAN and the Internet, or the like.

Note that these structures are the same in the following claims of the present invention.

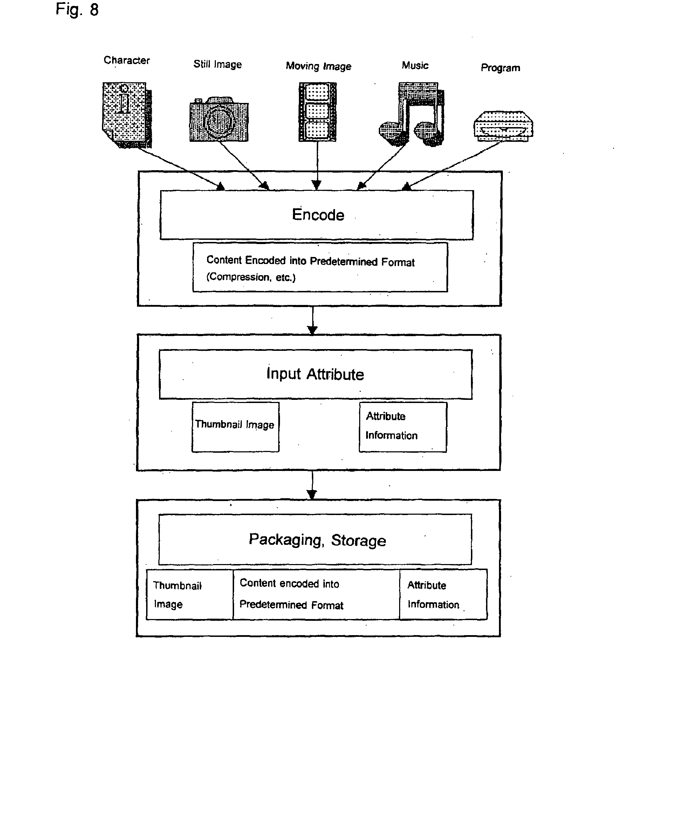

Fig. 8 is a flowchart showing an outline of basic processing at the time when encode of content is performed, and shows processing for encoding various contents such as a character, a still image, a moving image, music, and a program into a predetermined format such as compression as required, processing for creating sample data, and processing for inputting charging information and attribute information to change the information to packaged data.

Encode processing according to the invention of claim 1 performs processing including a step of designating charging information concerning a price for using the content, attribute information concerning control of use of the content, and information for creating the content main body and sample data of the content, a step of packaging data of the content based upon the designated attribute information, a step of designating a storage place of the content, and a step of storing the packaged data in an information storage medium.

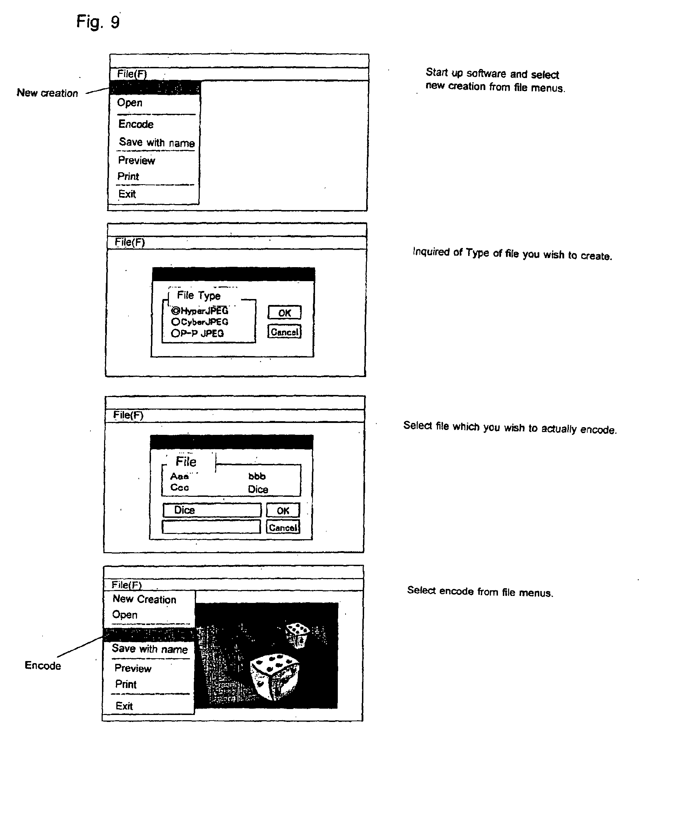

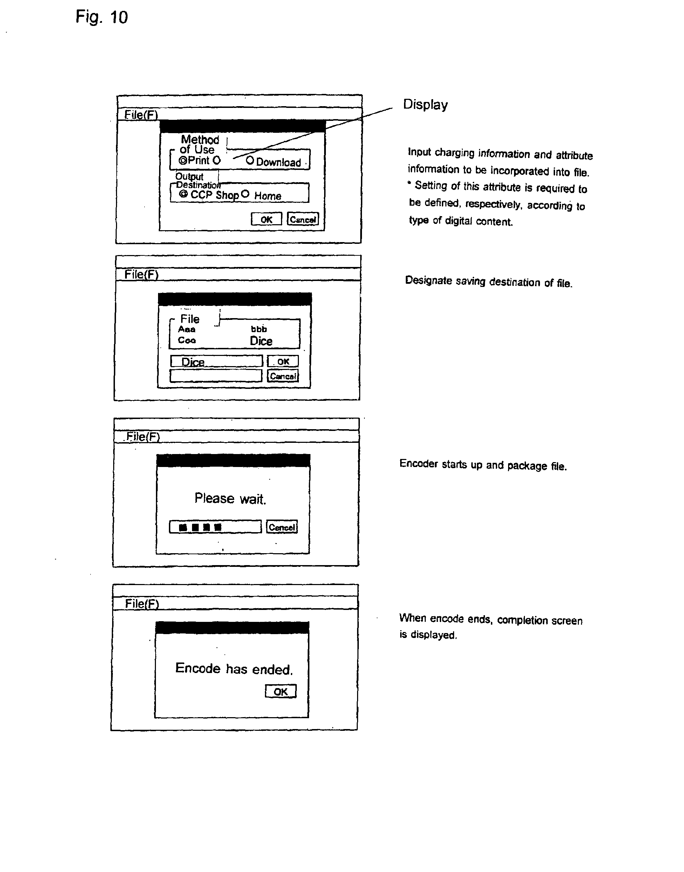

Figs. 9 and 10 illustrate screen images showing transition of a terminal screen in the case in which encode of content is performed using dedicated software.

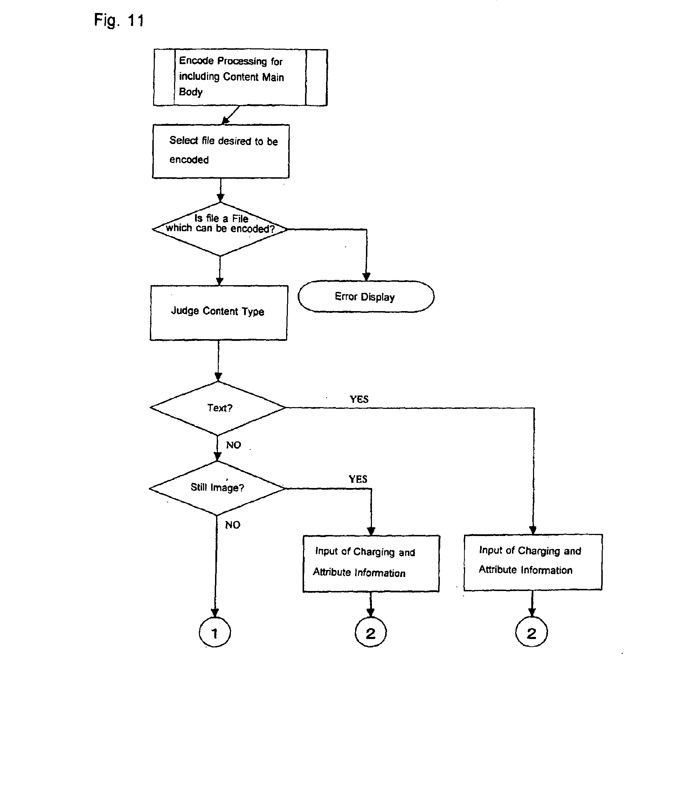

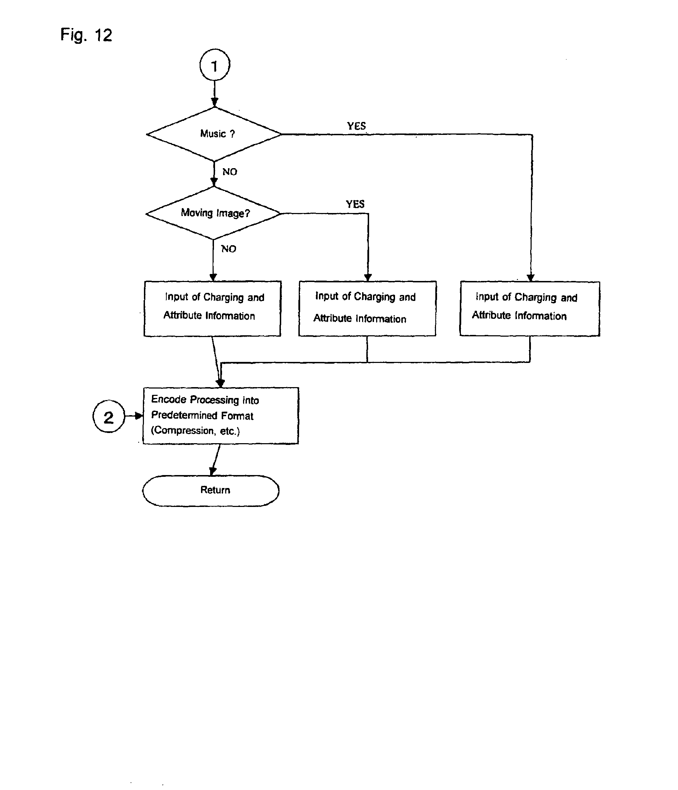

In addition, Figs. 11 and 12 are flowcharts showing a flow of basic processing of an encode system in the case in which a content main body is included in data which is encoded and stored in an information storage medium, that is, in the invention of claim 1.

In Fig. 11, first, the encode system selects an original file of content which is desired to be encoded in a terminal. The encode system designates a file desired to be created (data format in storing content) and designates original content to be actually encoded by, for example, starting up software for encode and selecting a new creation menu from file menus as in the screen of Fig. 9.

In Fig. 11, the encode system judges whether or not the file is a file which can be encoded and, next, issues an instruction of "encode" in Fig. 9, thereby judging a type of the original content to be actually encoded. The encode system judges whether the original content is, for example, character information, still image information, music (voice) information, moving image information, or the like.

Next, the encode system inputs the charging information and the attribute information.

These are information on an output method such as printing or download and an output destination.

Next, the encode system designates a saving destination of the file. A place for saving (storing) the file may be a storage device of a terminal, a storage device connected to the terminal, or a storage device connected in a remote place via a communication line.

Next, in Fig. 10, an encoder is started up and the charging information and the attribute information are added to the file of the content and, at the same time, the content main body is compressed into a predetermined format. In addition, a unique ID for identifying the content is allocated and, at the same time, sample data of the content is created separately from the content main body.

In the data stored by the above-mentioned processing, the sample data of the content, the data of the content, the charging information concerning a price for using the content, the attribute information concerning control of use of the content, and the unique ID for identifying the content are included.

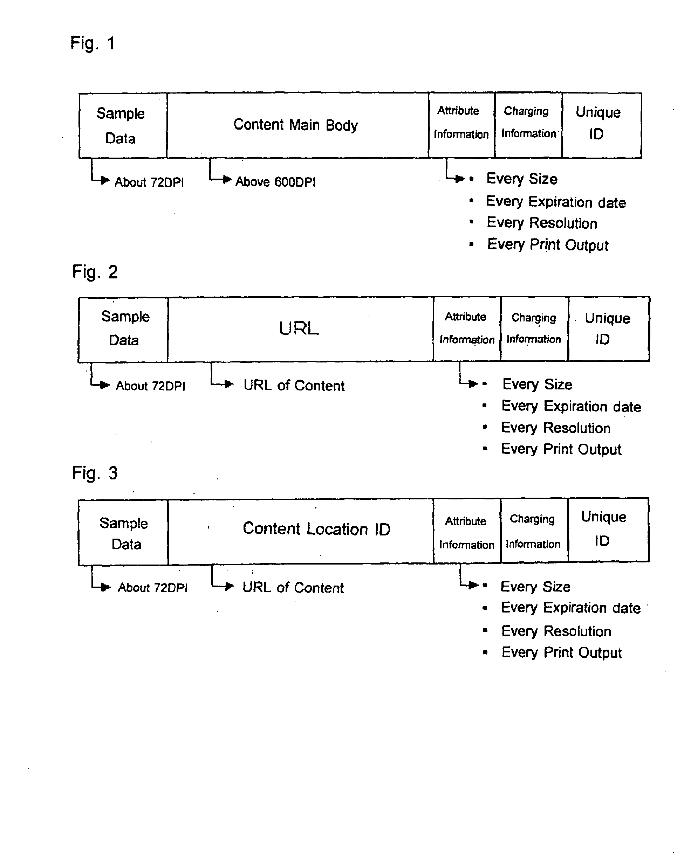

An example of the data structure of the content is the one shown in Fig. 1.

As a desirable example of the data format, for example, there is a format in which, for example, the sample data is an image of the JPEG format with a resolution of 72 dpi or more and the data of the content (image in this context) is an image of an original format having a resolution of 600 dpi or more.

Conventionally, for example, in the case in which content such as an image is displayed on a WEB, a content main body such as an image has been displayed by, for example, displaying thumbnails in a small size (and a low resolution as well) and, next, clicking a thumbnail of an image desired to be browsed out of the thumbnails. These are separate images, that is, a content image and a thumbnail image are saved separately.

In the above-mentioned embodiment, these are managed as one data and, at the same time, a unique ID capable of uniquely identifying pertinent content out of a large number of contents is given to the data, and charges for use of the content by method of use such as downloading or printing of the content, by output service, or by size or resolution of the content, that is, the above-mentioned charging information, and the attribute information for limiting users of the content like, for example, limitation to members or controlling distribution or use of the content are managed as data of one record.

In the present invention, the various problems as described above are solved by providing at least fields of sample data, data of content, charging information, attribute information, and a unique ID in one record and usually providing symbols indicating, for example, which part of content is sample data at the time when, for example, these data are read out.

This is true for a data structure of content in other claims of the present invention.

### (Second embodiment)

A system according to the invention of claim 2 is an encode system for content data for encoding content such as an image consisting of computer readable data using a computer system provided with input means, storage means, control means, display means, and output means, which is characterized in that sample data of content, information on a URL where a content main body exists, charging information concerning a price of using content, and a unique ID for identifying content are included in data stored by processing including:
a step of designating charging information concerning a price of using the content, attribute information concerning control of use of the content, and information for creating the content main body and sample data of the content;
a step of packaging data of the content based upon the designated attribute information; and
a step of storing the packaged data in an information storage medium.

Figs. 9 and 10 illustrate screen images showing transition of a terminal screen in the case in which encode of content is performed using dedicated software.

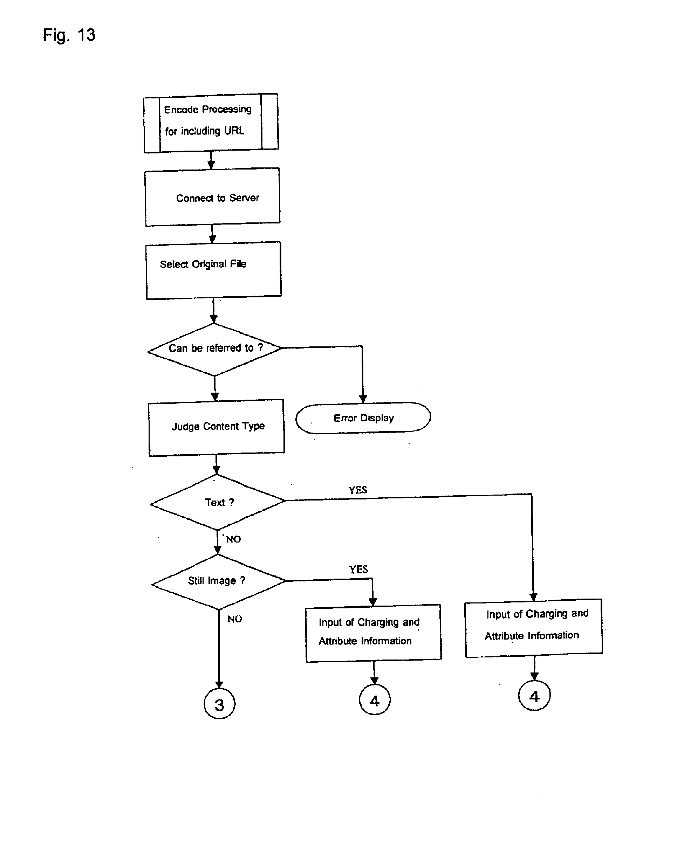

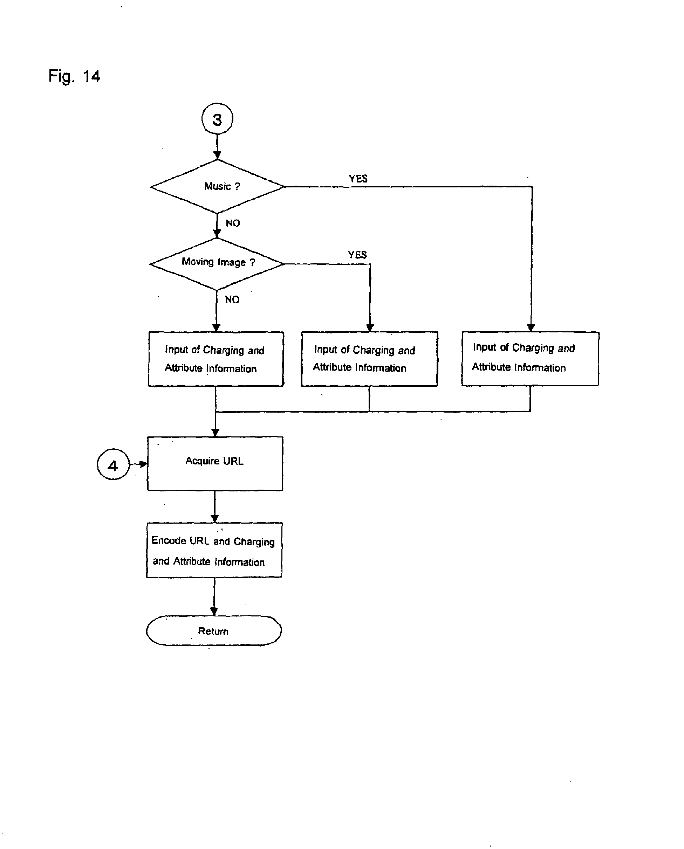

In addition, Figs. 13 and 14 are flowcharts showing a flow of basic processing of the encode system in the case in which a URL where content is located is included in data which is encoded and stored in an information storage medium, that is, in the invention of claim 2.

In Fig. 13, first, the encode system selects an original file of content which is desired to be encoded in a terminal. The encode system designates a file desired to be created (data format in storing content) and designates original content to be actually encoded by, for example, starting up software for encode and selecting a new creation menu from file menus as in the screen of Fig. 9.

Here, in order to designate the URL where the content is located, an original content main body exists in the URL in advance and, in Fig. 13, the encode system judges whether the URL where the content is located can be referred to. Next, the encode system judges whether the file can be encoded and, next, issues an instruction of "encode" in Fig. 9, thereby judging a type of the original content to be encoded. The encode system judges whether the original content is, for example, character information, still image information, music (voice) information, moving image information, or the like.

Next, the encode system inputs the charging information and the attribute information.

These are information on an output method such as printing or download and an output destination.

Next, the encode system designates a saving destination of the file. A place for saving (storing) the file may be a storage device of a terminal, a storage device connected to the terminal, or a storage device connected in a remote place via a communication line.

Next, in Fig. 10, an encoder is started up and the charging information and the attribute information are added to the file of the content and, at the same time, acquisition of URL information in Fig. 14 is performed, and moreover, a unique ID for identifying the content is allocated and, at the same time, sample data of the content is created separately from the content main body.

An example of the data structure of the content is the one shown in Fig. 2, in which the sample data of the content, the information on an URL where the content is located, the charging information concerning price information of the content, and the unique ID for identifying the content are included.

As a desirable example of the data format, for example, there is a format in which, for example, the sample data is an image of the JPEG format with a resolution of 72 dpi or more and the data of the content (image in this context) is an image existing in a place designated by the above-mentioned URL.

### (Third embodiment)

A system according to the invention of claim 3 is an encode system for content data for encoding content such as an image consisting of computer readable data using a computer system provided with input means, storage means, control means, display means, and output means, which is characterized in that sample data of content, a content location ID for identifying a location of the content on a network, charging information concerning a price of using content, and a unique ID for identifying content are included in data stored by processing including:
a step of designating charging information concerning a price of using the content, attribute information concerning control of use of the content, and information for creating the content main body and sample data of the content;
a step of packaging data of the content based upon the designated attribute information; and
a step of storing the packaged data in an information storage medium.

Figs. 9 and 10 illustrate screen images showing transition of a terminal screen in the case in which encode of content is performed using dedicated software.

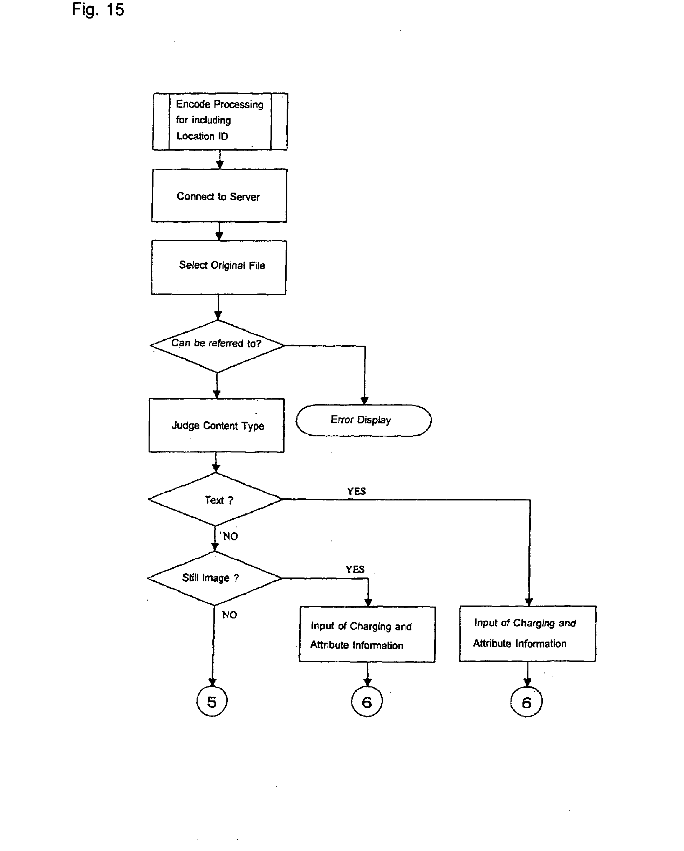

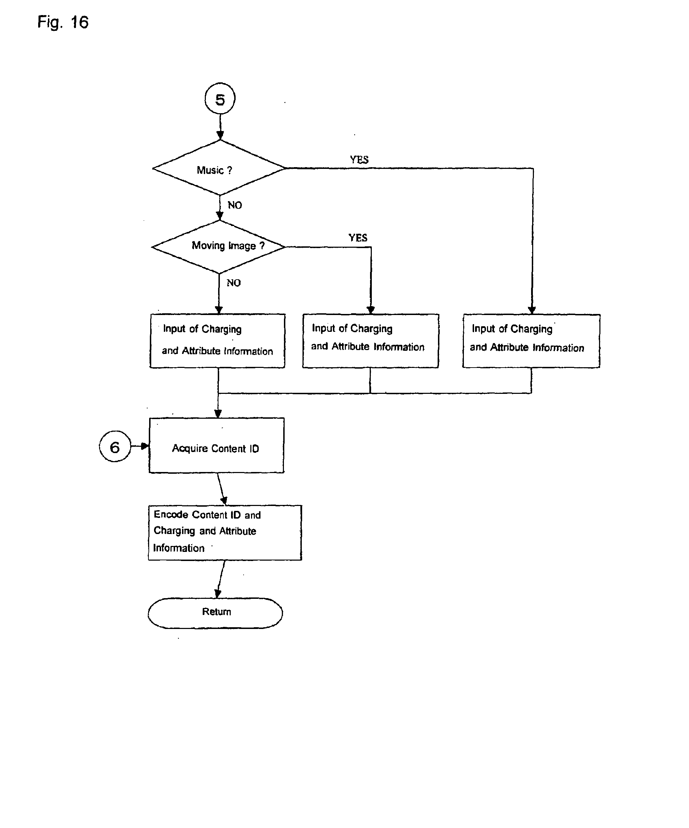

In addition, Figs. 15 and 16 are flowcharts showing a flow of basic processing of the encode system in the case in which a content location ID of content on a network URL is included in data which is encoded and stored in an information storage medium, that is, in the invention of claim 3.

In Fig. 15, first, the encode system selects an original file of content which is desired to be encoded in a terminal. The encode system designates a file desired to be created (data format in storing content) and designates original content to be actually encoded by, for example, starting up software for encode and selecting a new creation menu from file menus as in the screen of Fig. 9. Here, the encode system selects an original file which is the original content from a network connected by an LAN or the like.

In Fig. 15, the encode system judges whether the file is a file which can be referred to on the network and issues an instruction of "encode" in Fig. 9, thereby judging a type of the original content to be encoded. The encode system judges whether the original content is, for example, character information, still image information, music (voice) information, moving image information, or the like.

Next, the encode system inputs the charging information and the attribute information.

These are information on an output method such as printing or download and an output destination.

Next, the encode system designates a saving destination of the file. A place for saving (storing) the file may be a storage device of a terminal, a storage device connected to the terminal, or a storage device connected in a remote place via a communication line.

Next, in Fig. 10, an encoder is started up and the charging information and the attribute information are added to the file of the content and, at the same time, the content location ID for identifying a location of the content main body on a network is acquired, and moreover, a unique ID for identifying the content is allocated and, at the same time, sample data of the content is created separately from the content main body.

An example of the data structure of the content is the one shown in Fig. 3, in which the sample data of the content, the content location ID for identifying a location of the content on a network, the charging information concerning price information of the content, and the unique ID for identifying the content are included.

As a desirable example of the data format, for example, there is a format in which, for example, the sample data is an image of the JPEG format with a resolution of 72 dpi or more and the data of the content (image in this context) is an image existing in a place designated by the above-mentioned content location ID. Data management according to a database is applied to the content location ID in a storage device of a database server or the like, and an ID given for each content, a URL where the content is located, and data specifying a place where the content is located on a network such as an LAN are stored therein associated with each other. The database is referred to with the content location ID as a key to specify a location of the content.

In the content according to any of claims 1 to 3, one or plural data of the following data can be included in the charging information provided in the content.

The data are conditions such as a size, a term of validity, a resolution, and an output method.

Various forms of data such as image data, moving image data, an animation image, voice data, character data, computer game software, a computer program, and a combination of them are included in the content.

An encode system according to the invention of claim 4 is an encode system for content data according to any one of claims 1 to 3 of the present invention, which is characterized in that one or plural conditions among conditions such as a size, a term of validity, a resolution, and an output method of content are included in the charging information provided in the created and stored data.

### (Fourth embodiment)

In addition, in particular, an encode system according to the invention of claim 5 has a characteristic in that the content in the created and stored data is as described below.

That is, the encode system according to the invention of claim 5 is an encode system according to any one of claims 1 to 4 of the present invention, which is characterized in that the content main body provided in the created and stored data is in a data format with which the content main body is subjected to processing for performing compression of an amount of data and, at the time when the content main body is used, the content is decoded and outputted in response to a command from the content server.

### (Fifth embodiment)

In addition, in particular, an encode system according to the invention of claim 6 is a system, which is characterized in that the created and stored data is a file such as an HTML file, an XML file, or a CHTML file to be displayed on a computer network, which includes the sample data of the content, the information on a URL where the content main body is located or the content location ID for identifying a location of the content on a network, the charging information concerning price information of the content, the attribute information concerning control of use of the content, and the unique ID for identifying the content.

The content main body exists in a place designated by the URL or the content location ID for identifying a location of the content on a network.

In addition, in a tag in a source of the file to be defined independently, the charging information concerning price information of the content, the attribute information concerning control of use of the content, and the unique ID for identifying the content are included in the file. The independent definition of the tag is particularly effective for performing content management in cooperation with a database storing the content main body in the file using XML or the like.

At the time when the content is used, information is sent and received between a user terminal and the system of the present invention, and the user terminal detects the charging information and the attribute information defined by the tag and outputs and uses the content in a form in which the content is subjected to charging processing and available for output or the like.

### (Sixth embodiment)

In addition, an encode system according to the invention of claim 7 is characterized in that the content is as described below.

That is, the encode system is characterized in that the above-mentioned information storage medium is a content server for storing content such as an image on a computer network.

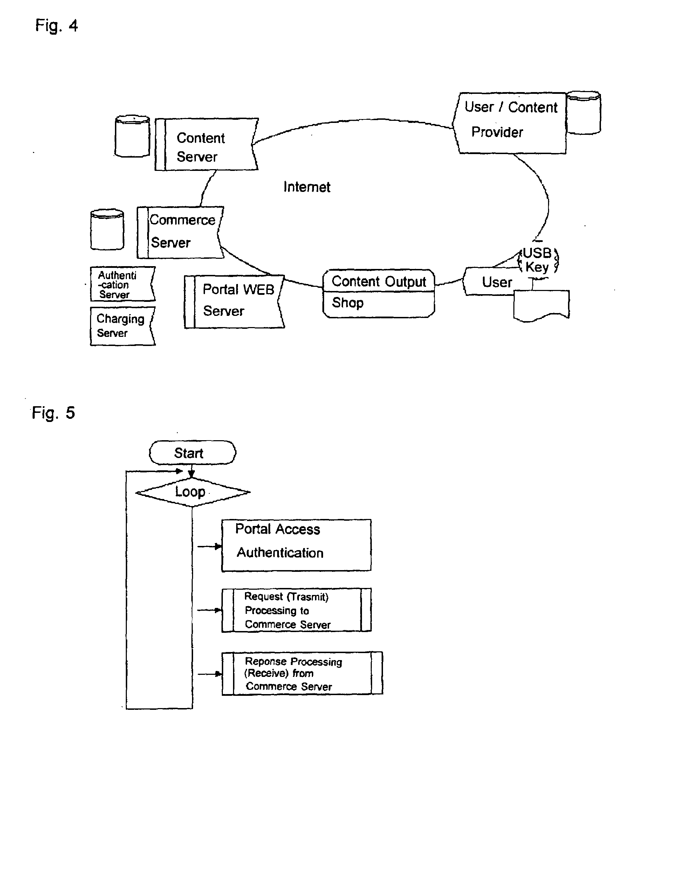

Fig. 4 is a system diagram showing an example of a basic system configuration of the encode system for content of the present invention.

The content server is a storage apparatus for storing the above-mentioned various contents in the system of the present invention in which charging at the time of download and charging at the time of use are provided for distribution of content.

Fig. 4 is a system diagram showing a basic configuration of the system in accordance with the present invention.

A basic hardware configuration includes, on a computer network, a content server for storing content such as an image, a portal WEB server which a user accesses in order to use and purchase the content, and a commerce server for managing information on users and information on use and purchase of contents by users. In addition, if necessary, a large database server, an image storage/distribution server, a WEB server, a mail server, an application server, a retrieval server, an authentication server, and the like can be provided in the system, and it is desirable to secure safety for the various servers by multiplexing them as required.

Note that these are examples of desirable configurations, and the servers may adopt any configuration as long as functions of the respective servers described below in detail can be realized because locations of the servers can be specified according to a URL or the like.

In addition, the respective servers such as the content server, the portal WEB server, and the commerce server may exist in a physically identical place. However, even in the case in which the servers exist in places physically and spatially apart from each other, the system of the present invention can be realized because locations of the servers can be specified according to a URL or the like.

The content encode system of the present invention is provided with a content server for storing content such as an image on a computer network.

A function of the content server includes processing as described below.
(1) Receiving a processing request from a commerce server and sending a processing result to the commerce server.
(2) Performing registration, update, and deletion of content.
(3) Encoding content.

Note that the commerce server and the content server are desirably connected according to a highly secure system.

Next, the content encode system of the present invention is provided with a portal WEB server which a user accesses in order to use and purchase content.

A function of the portal WEB server includes processing as described below.
(1) Relaying an image distribution service request from a user (browser) to the commerce server.
(2) Relaying a reply from the commerce server to the user.
(3) Connecting the portal WEB server and the commerce server according to a highly secure system.

In addition, the content encode system of the present invention is provided with a commerce server for managing information on users and information on use and purchase of contents by the users.

A function of the commerce server includes processing as described below.
(1) Receiving a processing request from the portal WEB server and sending a processing result to the portal WEB server.
(2) Performing authentication of a user (authentication server function).
(3) Performing registration, update, and deletion of a user.
(4) Managing charging information of an image distribution service for a user (e.g., a user ID, a date of use, an image number, an image size, a resolution, a term of validity, a method of output/use such as print output) (charging server).
(5) Managing information on registration of content.
(6) Managing an image distribution service log of a user.
(7) Connecting the commerce server and the content server according to a highly secure system.

A flow of basic processing of the present invention will be hereinafter described.

Note that the flow of processing shown here is an example and is not limited to this.

Fig. 5 is a flowchart showing a flow of basic processing of the portal WEB server.

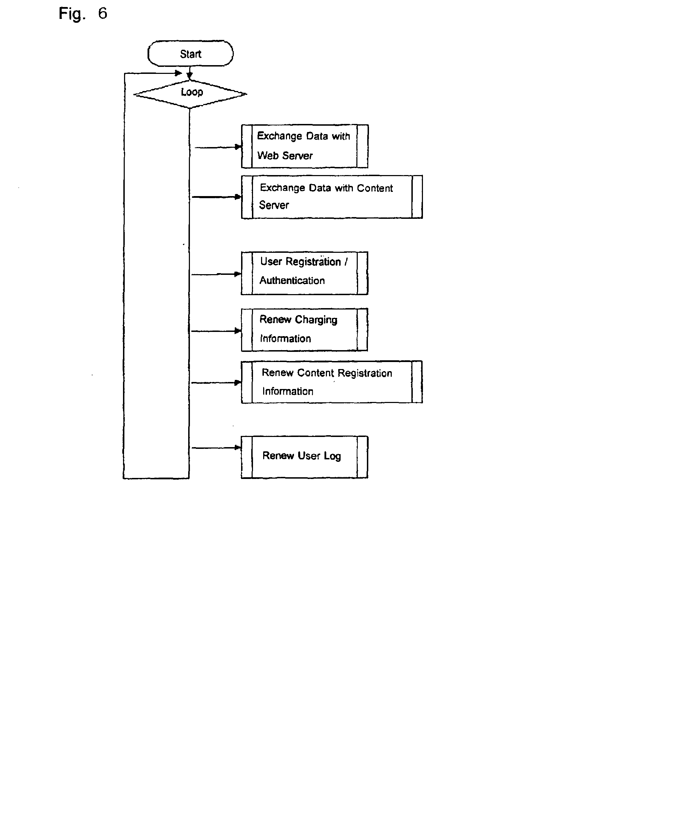

Fig. 6 is a flow chart showing a flow of basic processing of the commerce server

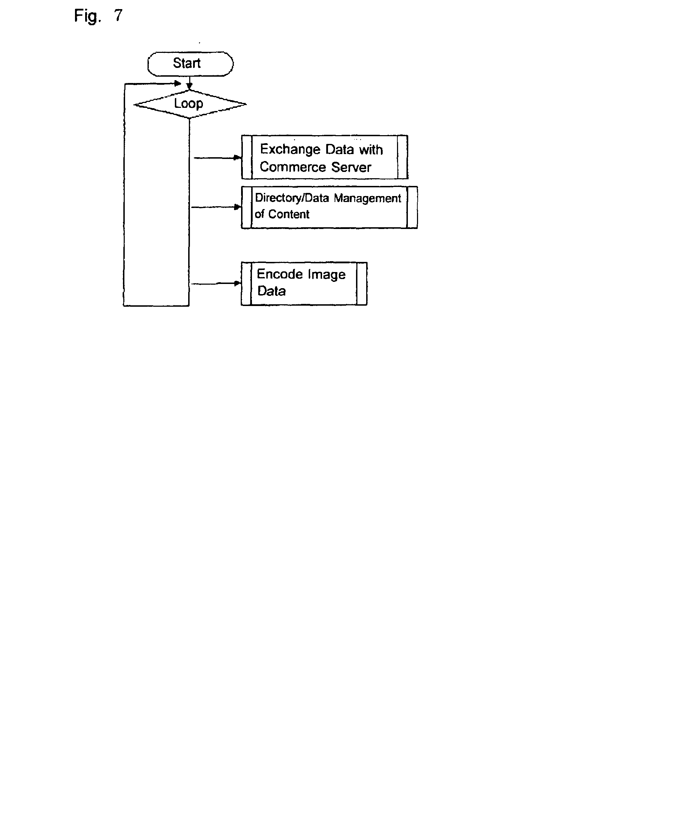

Fig. 7 is a flowchart showing a flow of basic processing of the content server.

### (Seventh embodiment)

A system according to the invention of claim 7 is an encode system for content data provided with, on a computer network, a content server for storing content such as an image, a portal WEB server which a user accesses in order to use and purchase the content, and a commerce server for managing information on a user and information on use and purchase of the content by the user, which is characterized by performing encode using an encode system for content data according to any one of claims 1 to 6 of the present invention.

Usually, the portal WEB server manages a WEB site (portal site) or the like for performing services such as download and output of content and charging a user for use of content, which a user wishing to use content accesses by, for example, inputting a URL in a browser provided in a terminal of the user connected to a network.

Here, the terminal of the user includes, other than a computer terminal such as a personal computer, various terminals, for example, a personal digital assistant such as a cellular phone provided with a browsing function, a dedicated terminal, or information consumer electronics such as a WEB-TV or a game device.

In the portal site, it is desirable to register member information for a user who receives service for use of content. Examples of the member information include an address, a name, a telephone number, an electronic mail address, a charging (settlement) method, and the like.

According to such registration and management of the member information, an authentication key for authentication and charging for content described below is issued.

Note that, in a form in which the authentication key is issued online, it is desirable that the authentication key is issued after the user performs input or the like of the member information in the portal site and sends the member information and the sent information is stored in the commerce server and undergoes examination or the like.

The member information is managed in the commerce server.

In addition, in the commerce server, registration, update, and deletion of a user are performed.

Alternatively, in the case in which a content output shop terminal provided by a system administrator side is provided being connected to a computer network, the authentication key can also be issued at a content output shop according to input or transmission of information from the content output shop terminal.

In the case in which a user uses and purchases content such as an image from the portal site, there are a method of charging at the time of download and a method of charging at the time of use.

As described above, a user wishing to use content makes connection to the portal site by, for example, inputting a URL in a browser provided in a terminal of the user connected to a network.

Here, the user performs browsing in order to select content which the user wishes to use out of various genres or content forms. The system is set such that the user in the portal site can only see a sample image for an image of any form.

That is, sample data among data included in the above-mentioned content is displayed on the WEB site.

The content is stored in the content server and, according to a user's act such as selection of content, the commerce server receives a processing request from the portal WEB server.

The content server receives a processing request from the commerce server and sends a processing result to the commerce server, and the commerce server sends the processing result to the portal WEB server, whereby the sample data is, for example, displayed. In the case of voice data, a sample voice is outputted. The commerce server and the content server are connected according to a highly secure system.

In addition, the content server performs registration, update, and deletion of content.

Charging information (rules for charging) for each content is set in advance by size, by resolution, by term of validity, and the like of content such as an image in the commerce server, and the commerce server manages the information by user and by content ID, and the commerce server (charging server) manages the information for by user and by content ID.

The charging information for each content is a charging point according to, for example, a classification, an attribute, a method of use, and the like as described below.

It is a charging point according to classification, attribute, and utilization methods by content, by content size, by content output size (A0, A1, A2, A3, A4, ...), by resolution, by term of validity, by print output destination, by member, by content of license agreement, by connection base time system, and the like.

In addition, the commerce server manages information on registration of content. The information on registration of content is information for associating information such as a location, a genre, a data format, and a creator or owner of the content, and a destination of payment of a charged amount with a content ID and is stored in the commerce server.

Next, the user selects content, which the user wishes to download, out of browsed sample data of content, determines whether or not the user downloads the content, and sends information on the content, and the portal WEB server receives the information.

If the user does not download the content, he/she performs processing such as moving to another WEB page or returning to the previous page.

If the user downloads the content, processing described below is performed.

The commerce server receives a processing request from the portal WEB server and performs authentication of the user (authentication server function).

Next, the commerce server (authentication server) performs authentication, judges whether or not the authentication is allowed, returns a result of the processing to the portal WEB server, and sends an HTML file or the like indicating the result of judgment on propriety of authentication to a user terminal. That is, a result of authentication is displayed on a screen of the user terminal.

In addition, if the authentication is allowed, the commerce server can send a download instruction to the content server designating the user terminal as a transmission (download) destination and proceed to download processing. Before the processing, it is also possible to add processing for further urging the user to confirm whether or not download may be performed.

If these are cleared, the download processing is performed.

In addition, it is desirable to manage a use service log of download or the like of the user in the commerce server.

Note that, in a usual form, content which the user can browse at a stage before the content undergoes download/charging processing is the above-mentioned sample content.

Here, at the time of download, that is, at a stage in which charging processing is performed, according to download of content (i.e., content main body which is not sample data), the user acquires the content. However, in the case in which content stored in the content server is encoded into a predetermined data format (e.g., data compression or encryption), the content server performs the download processing and, next, the user terminal receives a decode key according to a method of use of content or the like designated by the user and collates it with attribute information for control of content use included in the content to perform processing for decoding.

In this embodiment, on the computer network, a content server for storing content such as an image, a portal WEB server which a user access to use and purchase the content, and a commerce server for managing information on users and information on use and purchase of content contents by users are provided, the content includes sample data of the content, data of the content, charging information concerning price information of the content, and a unique ID for identifying the content, and charging at output time is performed according to processing in which the user causes the user terminal to display the content, processing for setting an authentication key for charging the user at the time when the user downloads the content, and processing for performing authentication to judge whether or not the authentication is allowed, performing charging processing as a price for using the content if the authentication is allowed, and receiving the decode key to decode the content and output it.

Here, in a usual form, at the time of output such as printing, that is, at a stage in which charging processing is performed, according to decode of content (i.e., content main body which is not sample data), the user becomes capable of outputting the content. In this way, in the case in which content stored in the content server is encoded into a predetermined data format (e.g., data compression or encryption), the content server performs the download processing and, next, the user terminal receives a decode key according to a method of use of content or the like designated by the user and collates it with attribute information for control of content use included in the content to perform processing for decoding.

A system according to the invention of claim 8 is an encode system for content data provided with, on a computer network, a content server for storing content such as an image, a portal WEB server which a user accesses in order to use and purchase the content, and a commerce server for managing information on a user and information on use and purchase of the content by the user, which is characterized by performing encode using an encode system for content data according to any one of claims 1 to 7 of the present invention.

Here, in the case in which the encode system according to the invention of claim 2 is used, since information of a URL where content is located is included instead of data of a content main body included in the content in association with a unique ID of the information on registration of content managed by the commerce server, data of the content main body must be stored in a place designated by the URL separately from the content.

In addition, in the case in which the encode system according to the invention of claim 3 is used, since a content location ID for identifying a location of content on a network is included instead of data of a content main body included in the content in association with a unique ID of the information on registration of content managed by the commerce server, data of the content main body must be stored in a place designated by the content location ID separately from the content.

### (Eighth embodiment)

In addition, in the case in which the encode system for content data according to the invention of claim 4 is used, it is an encode system for content, in which processing for designating one or plural conditions among conditions such as a size, a term of validity, a resolution, and an output method of content is included in processing for performing encode, and charging is performed in accordance with the designated condition.

In this case, a user designates a condition such as an amount for charging with respect to content to be registered (charging information). This is information, which is set for each content, such as a point in the size, resolution, and a term of validity of the content such as an image.

The condition to be set here is managed in the commerce server and, at the same time, content including sample data of the content, data of the content (or information on a URL where the content is located, or content location ID for identifying a location on a network of the content), charging information concerning price information of the content, and a unique ID for identifying the content is created and stored in the content server. In the case in which the content stored in the content server is encoded into a predetermined data format (e.g., data compression or encryption), the content server performs processing for encoding the content and then performs registration processing.

### (Ninth embodiment)

In addition, a system according to the invention of claim 10 is an encode system for content data according to any one of claims 7 to 9 9 of the present invention, which is characterized in that the content to be encoded is content which a user registers from a user terminal connected to a network, processing for setting an authentication key for authentication with respect to the user at the time when the user registers the content, and encode is performed using an encode system for content data according to any one of the invention of 1 to 6 of the present invention.

That is, it is a user making connection from a user terminal that encodes the content through the network and registers it in the content server, and the user performs registration for authentication by, for example, performing member registration and receives in advance an authentication key serving as authentication data for being granted individual authentication.

The authentication key may be a hardware key such as a USB key as in the invention of claim 11 or may be acquired through the network when the user accesses the commerce server as in the invention of claim 12.

Moreover, as in the invention of claim 13, the system is further provided with a content registration shop terminal, which is provided by the system administrator side, connected to the computer network, and a user provides an authentication key in the content registration shop terminal, whereby the system becomes capable of registering the content.

In addition, a system according to the invention of claim 14 is characterized by including a step of, when encode of content is performed, in the terminal apparatus, selecting whether the content main body is to be included, the URL where the content is located is to be included, or the content location ID for identifying a location of content on a network is to be included in data which is encoded and stored in an information storage medium

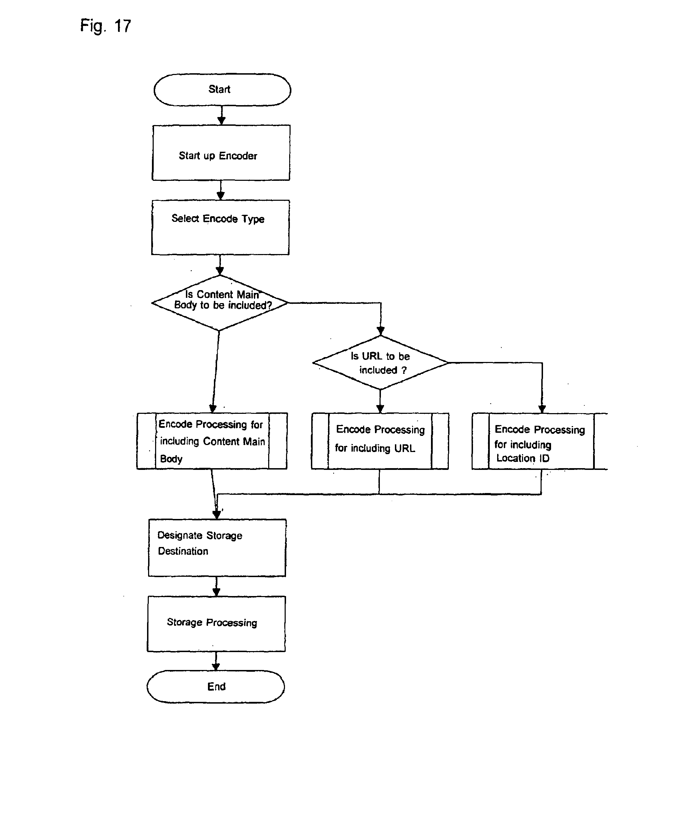

Fig. 17 is a flowchart showing an example of a flow of basic processing of this case.

### INDUSTRIAL APPLICABILITY

As described above in detail, the present invention relates to a system for encoding content such as an image file into a predetermined data format and a system for registering content using the encode system, and more specifically, the present invention provides an encode system for encoding content into a data format for charging a user for the content when the user downloads the content from a content server through a computer network such as the Internet.

In addition, in particular, a system can be provided which is capable of encoding data of content used for distribution of the content into a data format, with which storage and data management can be performed efficiently, by performing data compression or the like.

Further, a system can be provided which allows a user to browse, other than content itself, only a sample of the content before, for example, charging the user for browsing the content or is capable of encoding content into a data format which is preferable for managing incidental information concerning charging information, copyright, and the like.

Moreover, a system with which a user is capable of registering content in a server using these encode systems can be provided.

## Claims

1. A system for encoding content such as an image consisting of computer readable data using a computer system provided with input means, storage means, control means, display means, and output means, the encode system for content data, **characterized in that** sample data of content, data of content main body, charging information concerning a price of using the content, attribute information for controlling use of the content, and a unique ID for identifying the content are included in data stored by processing comprising:
a step of designating charging information concerning a price of using the content, attribute information concerning control of use of the content, and information for creating the content main body and sample data of the content;
a step of packaging data of the content based upon the designated information;
a step of designating a storage place of the content; and
a step of storing the packaged data in an information storage medium.

2. A system for encoding content such as an image consisting of computer readable data using a computer system provided with input means, storage means, control means, display means, and output means, the encode system for content data, **characterized in that** sample data of content, information on a URL where a content main body exists, charging information concerning a price of using the content, attribute information for controlling use of the content, and a unique ID for identifying the content are included in data stored by processing including:
a step of designating charging information concerning a price of using the content, attribute information concerning control of use of the content, and information for creating the content main body and sample data of the content;
a step of packaging data of the content based upon the designated information;
a step of designating a storage place of the content; and
a step of storing the packaged data in an information storage medium.

3. A system for encoding content such as an image consisting of computer readable data using a computer system provided with input means, storage means, control means, display means, and output means, the encode system for content data, **characterized in that** sample data of content, a content location ID for identifying a location of a content main body on a network, charging information concerning a price of using the content, attribute information for controlling use of the content, and a unique ID for identifying the content are included in data stored by processing including:
a step of designating charging information concerning a price of using the content, attribute information concerning control of use of the content, and information for creating the content main body and sample data of the content;
a step of packaging data of the content based upon the designated information;
a step of designating a storage place of the content; and
a step of storing the packaged data in an information storage medium.

4. An encode system for content data according to any one of claims 1 to 3, **characterized in that** one or plural conditions among conditions such as a size, a term of validity, a resolution, an output method, and the like of content are included in the charging information provided in the created and stored data.

5. An encode system for content data according to any one of claims 1 to 4, **characterized in that** the content main body provided in the created and stored data is in a data format with which the content main body is subjected to processing for performing compression of an amount of data and, at the time when the content main body is used, the content main body is decoded and outputted in response to a command from the content server.

6. An encode system for content data according to any one of claims 1 to 5, **characterized in that** the created and stored data is a file such as an HTML file, an XML file, or a CHTML file to be displayed on a computer network, which includes the sample data of the content, the information on a URL where the content main body is located or the content location ID for identifying a location of the content on a network, the charging information concerning price information of the content, the attribute information concerning control of use of the content, and the unique ID for identifying the content.

7. An encode system for content data according to any one of claims 1 to 6, **characterized in that** the step of storing the packaged data in an information storage medium is processing for storing the data in a content server for storing content such as an image on the computer network.

8. A system comprising, on a computer network:
a content server for storing content such as an image;
a portal WEB server which a user accesses in order to use and purchase the content; and
a commerce server for managing information on a user and information on use and purchase of the content by the user, the encode system for content data **characterized by** performing encode using an encode system for content data according to any one of claims 1 to 7.

9. A content registration system according to any one of claims 1 to 8, **characterized in that** the registration of content becomes possible by using dedicated software provided in a browser.

10. An encode system for content data according to any one of claims 7 to 9, **characterized in that**:
the content to be encoded is content which a user registers from a user terminal connected to a network, processing for setting an authentication key for authentication with respect to the user at the time when the user registers the content is included; and
encode is performed using an encode system for content data according to any one of claims 1 to 7.

11. A content registration system according to claim 10, **characterized in that** an authentication key for authentication with respect to a user is a hardware key such as a USB key.

12. A content registration system according to claim 10 or 11, **characterized in that** the authentication key for authentication with respect to a user is obtained through a network when a user accesses the commerce server.

13. A content registration system according to any one of claims 9 to 12, **characterized by** further including a content registration shop terminal, which is provided by the system administrator side, connected to the computer network, and
a user provides an authentication key in the content registration shop terminal, whereby registration of content is possible.

14. An encode system for content data according to any one of claims 1 to 13, **characterized by** including a step of, when encode of content is performed, in the terminal apparatus, selecting whether the content main body is to be included, the URL where the content is located is to be included, or the content location ID for identifying a location of content on a network is to be included in data which is encoded and stored in an information storage medium.
